# EUROPÄISCHE PATENTANMELDUNG

(11) **EP 2 360 739 A1**
(43) Veröffentlichungstag der Anmeldung: **24.08.2011**
(21) Anmeldenummer: 10153290.1
(22) Anmeldetag: 11.02.2010
(51) Int. Cl.: H01L 31/048, E04D 5/06

(54) **Membran umfassend Solarzelle**

(71) Anmelder: Sika Technology AG, 6340 Baar (CH)
(72) Erfinder: Blank, Norman, 8803, Rüschlikon (CH); Lussi, Josef, 3920, Zermatt (CH); Meier, Heinz, 8032, Zürich (CH); Michel, Adrian, 6375, Beckenried (CH)
(74) Vertreter: Isler, Jörg

(57) **Zusammenfassung**

Bei einer Membran umfassend eine Schottschicht (2) sowie mindestens eine Solarzelle (3), sind die Seitenflächen (4) sowie die Unterseite (5) der mindestens einen Solarzelle (3) von der Schottschicht (2) umgeben.

## Beschreibung

### Technisches Gebiet

Die Erfindung geht aus von einer Membran umfassend eine Schottschicht und eine Solarzelle nach dem Oberbegriff des ersten Anspruches.

### Stand der Technik

Das Aufbringen von Solarzellen auf Dachbahnen über Klebstoffe ist bekannt. Der Nachteil dieser Art von Befestigung ist jedoch, dass sich die Solarzellen, insbesondere aufgrund von mechanischen Spannungen, von Dachbahnen lösen und sich dazwischen Hohlräume bilden können. Das nachfolgende Eindringen von Feuchtigkeit in diese Hohlräume wirkt sich besonders nachteilig auf den Verbund, insbesondere durch Schädigung der Klebstoffe, von Solarzelle und Dachbahn aus und fördert das weitere Ablösen.

Erwähnte Spannungen sind insbesondere bedingt durch horizontales und vertikales Verschieben gegeneinander von Solarzelle und Dachbahn, insbesondere wegen unterschiedlicher thermischer Längenausdehnungskoeffizienten der beiden Schichten. Solche Spannungen treten insbesondere bei Erwärmung durch intensive Sonneneinstrahlung, bei tiefen Aussentemperaturen oder bei Belastung durch Windsogkräfte auf.

Weiter führt der Umstand, dass der Klebstoff gegenüber äusseren Einflüssen wie Klima und UV-Stahlung ausgesetzt ist dazu, dass der Klebstoff durch ebensolche mit der Zeit geschädigt wird und dadurch der Verbund weiter geschwächt wird

Ein weiteres Problem besteht darin, dass die Solarzelle auf der Schottschicht angebracht wird, beispielsweise durch Verkleben, und daher exponiert wird. Dadurch wird die Solarzelle und deren Mittel zur elektrischen Verbindung in hohem Masse mechanischen Belastungen ausgesetzt, die bei der Herstellung, dem Transport, der Installation oder der Verwendung der Membran zu Beschädigungen führen können.

### Darstellung der Erfindung

Aufgabe der vorliegenden Erfindung ist es daher, eine Membran der eingangs genannten Art dahingehend zu verbessern, das Ablösen von auf Dachbahnen aufgebrachten Solarzellen und infolgedessen das Ausbilden von Hohlräumen und das anschliessende Eindringen von Feuchtigkeit zu minimieren und einen besseren Schutz der Solarzelle vor mechanischen Belastungen zu gewährleisten.

Erfindungsgemäss wird dies durch die Merkmale des ersten Anspruches erreicht.

Kern der Erfindung ist es also, dass bei einer Membran umfassend eine Schottschicht sowie mindestens eine Solarzelle, die Seitenflächen sowie die Unterseite der mindestens einen Solarzelle von der Schottschicht umgeben sind. Die mindestens eine Solarzelle ist daher in die Schottschicht eingelassen, welche dadurch als teilweise Verkapslung der Solarzelle dient. Dies ist dahingehend von Vorteil, dass die Seitenflächen sowie die Unterseite der Solarzelle, welche typischerweise besonders anfällig auf Beschädigungen durch Flüssigkeiten sind, vor ebensolchen geschützt sind. Es ist daher vorteilhaft, wenn mindestens 75%, insbesondere 90% der Seitenflächen der Solarzelle von der Schottschicht umgeben sind. Insbesondere bevorzugt sind die Seitenflächen der Solarzelle vollständig von der Schottschicht umgeben. Ferner dient das Material der Schottschicht als Verkapselung, auf einen Klebstoff kann daher in gewissen Fällen verzichtet werden. Sollte trotzdem ein Klebstoff nötig sein, um den Verbund zwischen Solarzelle und Schottschicht sicherzustellen, wird dieser Klebstoff durch das Material der Schottschicht vor Exposition gegenüber von Flüssigkeiten oder und dadurch vor Beschädigung durch äussere Einflüsse wie Klima, UV-Stahlung und insbesondere Flüssigkeiten geschützt. Aufwändige Verkapselungsmethoden der Solarzellen, beispielsweise durch Randversiegelungen mit zusätzlichen Folien oder Dichtstoffen, entfallen dadurch.

Vorzugsweise ist die Solarzelle dadurch in der vorhergehend beschriebenen Art von der Schottschicht umgeben, weil die Solarzelle in die Schottschicht eingelassen ist. Mit Vorteil verläuft dadurch die Oberseite der Solarzelle im Allgemeinen bündig mit der Oberfläche der Schottschicht. Dies ist dahingehend von Vorteil, dass dadurch die Solarzelle weniger mechanischen Belastungen ausgesetzt ist, die bei der Herstellung, dem Transport, der Installation oder der Verwendung der Membran auftreten können. Wird auf der Oberfläche der Membran beispielsweise eine Deckschicht zum Schutz der Solarzelle vor Verschmutzung aufgebracht, so treten beim Verbinden, beispielsweise durch Vakuumlamination, der Deckschicht mit der Membran grosse Kräfte auf, welcher eine in die Schottschicht eingelassene Solarzelle in viel geringerem Masse ausgesetzt ist als eine durch klassische Verklebung auf der Membran aufgebrachte Solarzelle.

Es ist besonders zweckmässig, wenn zusätzlich Teile der Oberseite der Solarzelle von der Schottschicht umgeben sind, da dadurch die Verkapselung und der Schutz der Seitenflächen sowie der Unterseite der Solarzelle noch effektiver ausgestaltet werden.

Es ist weiter vorteilhaft, wenn zwischen mindestens einer der Seitenflächen oder der Unterseite der Solarzelle und der Schottschicht ein Zwischenraum ausgebildet ist. In einem solchen Zwischenraum können beispielsweise Mittel zur elektrischen Verbindung der Solarzelle angeordnet und dadurch vor den erwähnten mechanischen Belastungen und/oder Feuchtigkeit geschützt werden. Ferner kann ein solcher Zwischenraum zum Ausgleich von Spannungen dienen, welche aufgrund unterschiedlicher thermischer Längenausdehnungskoeffizienten der Materialien der Solarzelle und der Schottschicht auftreten können.

Weitere vorteilhafte Ausgestaltungen der Erfindung ergeben sich aus den Unteransprüchen.

Weitere Aspekte der Erfindung sind Gegenstand weiterer unabhängiger Ansprüche.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1-5: Querschnitte durch erfindungsgemässe Membranen
- Fig. 6: Aufsicht einer erfindungsgemässen Membran
- Fig. 7-9: Querschnitte durch eine Schottschicht mit Aussparung
- Fig. 10: Perspektivische Darstellung einer Schottschicht mit Aussparungen
- Fig. 11: Aufsicht einer Schottschicht mit Aussparungen

Es sind nur die für das unmittelbare Verständnis der Erfindung wesentlichen Elemente gezeigt.

### Weg zur Ausführung der Erfindung

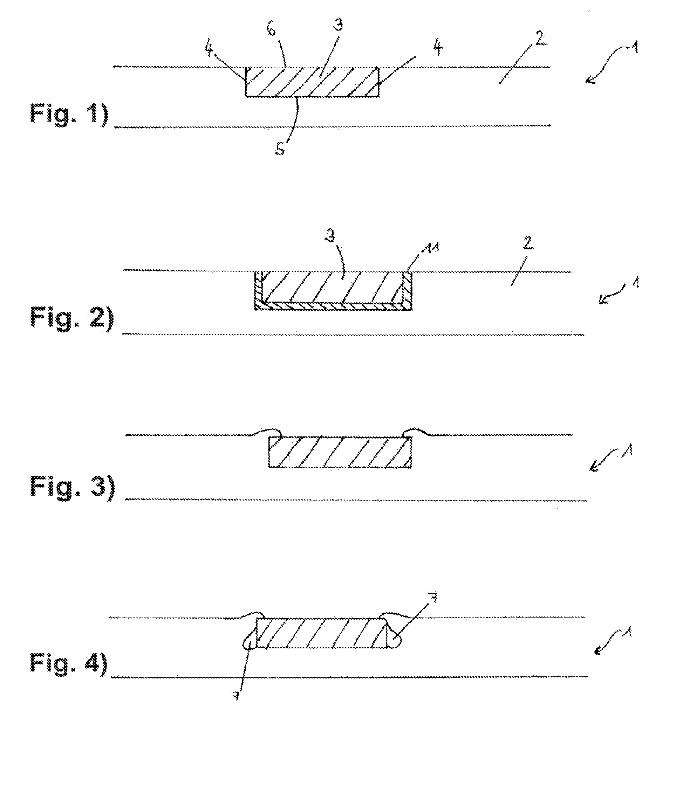

In der Figur 1 ist eine Membran 1 dargestellt, umfassend eine Schottschicht 2 sowie mindestens eine Solarzelle 3, wobei die Seitenflächen 4 der mindestens einen Solarzelle sowie die Unterseite 5 der mindestens einen Solarzelle von der Schottschicht 2 umgeben sind.

Die Seitenflächen 4 und/oder die Unterseite 5 der Solarzelle 3 können direkt mit der Schottschicht 2 verbunden sein. Unter "direkt verbunden" wird verstanden, dass keine weitere Schicht oder Substanz zwischen zwei Werkstoffen vorliegt und dass die zwei Werkstoffe direkt miteinander verbunden sind, beziehungsweise aneinander haften. Dies ist beispielsweise in Figur 1 gezeigt.

Die Seitenflächen 4 und/oder die Unterseite 5 der Solarzelle 3 können im Wesentlichen fest an der Schottschicht 2 angeordnet sein. Dies kann insbesondere dadurch erfolgt sein, dass bei der Herstellung der Membran die Seitenflächen 4 sowie die Unterseite 5 und die Schottschicht durch Wärmeeinwirkung, durch Druck, durch physikalische Absorption oder durch jede andere physikalische Krafteinwirkung direkt miteinander verbunden werden. Dies hat insbesondere den Vorteil, dass keine chemische Verbindung von Schottschicht und den Seitenflächen 4 sowie die Unterseite 5 der Solarzelle 3 mittels Klebstoffen notwendig ist, was sich vorteilhaft auf die Herstellungskosten der Membran 1 auswirkt.

Es besteht jedoch auch die Möglichkeit, die Seitenflächen 4 und/oder die Unterseite 5 mit der Schottschicht durch eine Klebschicht 11 zu verbinden, wie dies beispielsweise in Figur 2 gezeigt ist. Vorzugsweise hat ein solcher Klebstoff einen dem Material der Schottschicht ähnlichen thermischen Längenausdehnungskoeffizienten.

Ein in einer solchen Klebschicht 11 verwendeter Klebstoff kann beispielsweise ein Haftklebstoff und/oder ein Schmelzklebstoff sein. Dies gewährleistet einen guten Verbund und eine gute Haftung der Flächen der Solarzelle 3 auf der Schottschicht 2.

Haftklebstoffe und Schmelzklebstoff sind dem Fachmann allgemein bekannt und sind beschrieben in CD Römpp Chemie Lexikon, Version 1.0, Georg Thieme Verlag, Stuttgart.

Vorzugsweise handelt es sich bei einem solchen Klebstoff um Klebstoffe ausgewählt aus der Gruppe bestehend aus Ethylen/Vinylacetat-Copolymer (EVA), vernetzbare thermoplastische Elastomere auf Olefinbasis, Acrylatverbindungen, Polyurethanpolymeren und Silan-terminierten Polymeren.

Bevorzugte Acrylatverbindungen sind insbesondere Acrylatverbindungen auf Basis von Acryl-Monomeren, insbesondere von Acryl- und Methacrylsäureestern.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Bevorzugte Klebstoffe sind unter dem Namen SikaLastomer®-68 bei Sika Corporation, USA kommerziell erhältlich.

Durch Oberflächenbehandlungen wie beispielsweise Coronabehandlung, Fluorierung, Plasmabehandlung und Beflammung der Schottschicht 2 kann die Haftung der Klebschicht 11 auf der Schottschicht verbessert werden.

Es ist vorteilhaft, wenn zusätzlich Teile der Oberseite 6 der Solarzelle 3 von der Schottschicht umgeben sind, insbesondere wenn erwähnte Teile der Oberseite direkt mit der Schottschicht verbunden sind, wie dies in Figur 3 gezeigt ist. Dadurch werden die Verkapselung und der Schutz der Seitenflächen sowie der Unterseite der Solarzelle noch effektiver ausgestaltet.

Vorzugsweise sind 1 - 3 % der Oberseite 6 der Solarzelle 3 von der Schottschicht umgeben.

Weiter ist es vorteilhaft, wenn die Oberseite 6 der Solarzelle 3 derart von der Schottschicht umgeben ist, dass die Seitenflächen 4 und die Unterseite 5 der Solarzelle 3 vor Flüssigkeiten auf der Oberseite 6 der Solarzelle 3 geschützt sind. Dies wird vorzugsweise durch einen guten Kontakt von Schottschicht mit den Seitenflächen 4 und der Unterseite 5 und/oder von der Schottschicht mit der Oberseite 6 gewährleistet, was verhindert, dass Feuchtigkeit den Kontaktflächen entlang eindringen kann.

Weiter ist es vorteilhaft, wenn zwischen mindestens einer der Seitenflächen 4 und/oder der Unterseite 5 und der Schottschicht 2 ein Zwischenraum 7 ausgebildet ist, wie dies beispielsweise in Figur 4 dargestellt ist. Der Zwischenraum ist von allen Seiten von Schottschicht oder Solarzelle umgeben und hat vorzugweise eine Grösse, um beispielsweise Spannungen durch horizontales und vertikales Verschieben gegeneinander von Solarzelle und Schottschicht, insbesondere bedingt durch unterschiedliche thermische Längenausdehnungskoeffizienten der beiden Schichten, auszugleichen.

Solche mechanischen Spannungen treten besonders durch Erwärmen der Membran, insbesondere der Solarzelle, bei intensiver Sonneneinstrahlung auf oder bei tiefen Aussentemperaturen. Eine Entkopplung solcher Spannungen durch den Zwischenraum 7 ist dahingehend von Vorteil, dass ein Ablösen von Solarzelle 4 von der Schottschicht 2 oder ein Beschädigen der Solarzelle verhindert wird.

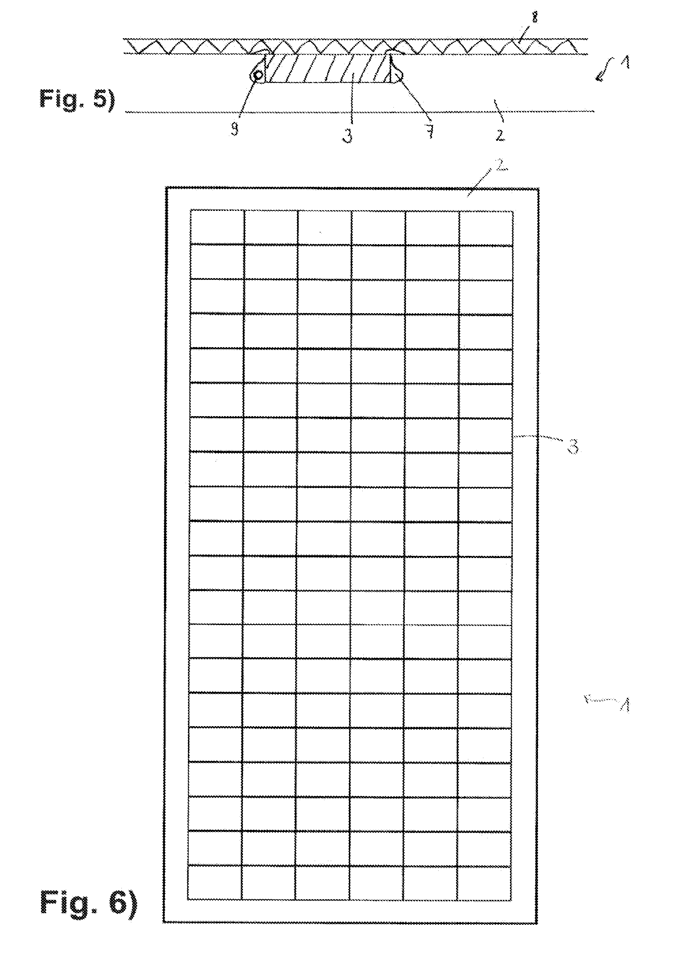

Ferner können in einem solchen Zwischenraum 7 auch Mittel zur elektrischen Verbindung 9 angeordnet werden, wie dies beispielsweise in Figur 5 gezeigt ist, welche dadurch unter anderem vor mechanischen Belastungen und/oder Feuchtigkeit geschützt werden.

Weiter ist aus Figur 5 ersichtlich, dass auf der Oberseite 6 der Solarzelle 3 zusätzlich eine Deckschicht 8 aufgebracht sein kann. Diese Deckschicht kann, wie in Figur 5 gezeigt, die gesamte Seite der Schottsicht, auf welcher sich die mindestens eine Solarzelle befindet, bedecken oder sich im wesentlichen auf die Oberseite 6 der Solarzelle beschränken.

Typischerweise handelt es sich bei der Deckschicht 8 um eine Schicht aus einem Kunststoff, welche sich durch eine hohe Transmission im Bereich des Spektrums der gängigen Solarzellen auszeichnen.

Vorzugsweise beträgt die Transmission des Materials der Deckschicht, gemessen bei einer Deckschichtdicke von 0.1 mm in einem Spektrum von 300-1300 nm, mehr als 85%, insbesondere mehr als 90%, insbesondere bevorzugt mehr als 93%.

Geeignete Materialien für die Deckschicht sind Fluoropolymere wie Copolymere von Ethylen and Tetrafluoroethylen, wie es beispielsweise von DuPont Corporation unter dem Handelsnamen Tefzel® vertrieben wird oder ein Polyvinylidenfluorid, vertrieben von der DuPont Corporation unter dem Handelsnamen Tedlar®.

Eine solche Deckschicht ist dahingehend von Vorteil, dass sie die Solarzelle vor Beschädigung, Verschmutzung sowie vor Eindringen von Flüssigkeit schützen kann.

Die Deckschicht weist typischerweise eine Dicke von 0.01 - 0.1 mm, bevorzugt 0.02 - 0.05 mm auf.

Die Schottschicht 2 kann aus allen Materialien bestehen, welche auch bei hohem Flüssigkeitsdruck eine ausreichende Dichtheit gewährleisten.

Es ist also von Vorteil, wenn die Schottschicht 2 eine hohe Beständigkeit gegen Wasserdruck und Witterung aufweist, sowie gute Werte in Weiterreissversuchen und Perforationsversuchen zeigt, was besonders bei mechanischen Belastungen auf Baustellen von Vorteil ist. Weiter ist eine Beständigkeit gegenüber andauernden mechanischen Belastungen, beispielsweise Wind, vorteilhaft.

Es ist insbesondere von Vorteil, wenn die Schottschicht 2 eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), insbesondere bevorzugt aus Polypropylen, aufweist. Daraus resultiert eine hohe Widerstandsfähigkeit gegenüber Umwelteinflüssen.

Vorzugsweise ist die Schottschicht 2 ausgewählt aus Materialien aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polyvinylchlorid (PVC), Ethylen/Vinylacetat-Copolymer (EVA), chlorsulfoniertes Polyethylen, thermoplastische Elastomere auf Olefinbasis (TPE-O, TPO), Ethylen-Propylen-Dien-Kautschuk (EPDM) und Polyisobutylen (PIB), sowie und Mischungen davon.

Die Schottschicht 2 kann eine Dicke von 0.5 - 8 mm, bevorzugt 1.5 - 5 mm, insbesondere 1.2 - 2 mm, aufweisen.

Unter dem Begriff "Solarzelle" werden in diesem Dokument sowohl eine einzelne Solarzelleneinheit als auch eine Vielzahl von untereinander elektrisch und/oder mechanisch verbundenen Solarzelleneinheiten verstanden. Solche Solarzelleneinheiten sind beispielsweise kommerziell erhältlich bei Clean Venture 21 Japan, Fuji Electric Japan, United Solar Ovonic LLC USA, Helianthos BV, Niederlande und Ascent Solar, USA.

Die erwähnten Solarzelleneinheit verfügen typischerweise über einen flexiblen Träger aus Kunststoff oder Metall und sind typischerweise in einer Kunststoffschicht eingefasst, welche sie vor Feuchtigkeit schützt.

Es ist weiterhin vorteilhaft, wenn die Dicke der Solarzelle 30 - 50 % der Dicke der Schottschicht 2 beträgt.

Dies gewährleistet unter anderem einen Schutz der Solarzelle durch die Schottschicht vor mechanischen Belastungen.

In Figur 6 ist eine bevorzugte Ausführungsform einer erfindungsgemässen Membran dargestellt.

Die Schottschicht 2 besteht aus einer Schicht aus thermoplastischen Polyolefinen oder Polyvinylchlorid (PVC) und hat eine Dicke von 1.2-2 mm. Die Solarzelle 3 hat eine Dicke von 0.2 -0.5 mm. Die Schutzschicht besteht aus Tefzel® mit einer Dicke von 0.05 -0.02 mm. Vorzugsweise handelt es sich bei der Membran um eine flexible Membran, die ein Aufrollen mit einem Biegeradius von 10 - 100 cm ermöglicht. Vorzugsweise handelt es sich bei der Membran um eine Dachbahn mit den Massen 110 cm Länge, 110 cm Breite und 2-3 mm Dicke, welche eine Solarzelle bestehend aus 6 x 20 Solarzelleneinheiten aufweist, wobei die Zwischenräume zwischen den Solarzelleneinheiten mit einem Kleb- oder Dichtstoff ausgefüllt sind. Die Membran ist vorzugsweise derart ausgestaltet, dass die Membran seitlich der Solarzelle einen Randbereich von 5 - 15 cm, vom äusseren Rand der Membran gemessen, aufweist. Dies ist für ein Verbinden der Dachbahnen miteinander vorteilhaft.

In einem weiteren Aspekt betrifft die vorliegende Erfindung ein Verfahren zur Herstellung einer Membran 1 wie sie vorgehend beschrieben wurde, wobei in eine Aussparung 10 in einer Schottschicht 2 eine Solarzelle 3 eingebracht wird.

Die Schottschicht 2 aufweisend eine Aussparung 10 kann auf jede Art und Weise, insbesondere auf handelsüblichen Maschinen, hergestellt werden. Die Schottschicht kann in einem einzigen Verfahrensschritt als Endlosware, beispielsweise durch Extrusion, wobei die Aussparung in der extrudierten Schottschicht schon aufgrund der Düsenform vorhanden ist, hergestellt werden und/oder in mehreren Verfahrensschritten, beispielsweise durch Kalandrieren oder Extrudieren mit anschliessender Walzprägung. Die Massetemperatur im Extruder oder Kalander kann in einem Bereich von 100°C - 210°C, bevorzugt 130°C - 200°C insbesondere 170°C - 200°C, liegen, bevorzugt während der Extrusion und/oder dem Kalandrieren. Vorzugsweise wird die Schottschicht 2 aufweisend eine Aussparung 10 im Extrusionsverfahren und/oder im Walzenprägverfahren hergestellt.

Handelt es sich bei der Solarzelle 3 um einen Verbund einer Vielzahl von untereinander elektrisch und/oder mechanisch, beispielsweise durch Ultraschallschweissen, verbundenen Solarzelleneinheiten, kann es weiter vorteilhaft sein, wenn die Zwischenräume zwischen den Solarzelleneinheiten mit einem Kleb- oder Dichtstoff ausgefüllt werden. Dies bringt den Vorteil, dass die Oberfläche der Solarzelle keine Einbuchtungen aufweist, worin sich Wasser, insbesondere Regenwasser, ansammeln könnte. Weiter trägt dies zur Stabilität der Solarzelle bei und erlaubt einen gleichmässigen Übertrag von mechanischen Belastungen. Dies für das Einbringen der Solarzelle 3 in die Aussparung 10 vorteilhaft, ferner gegenüber den mechanischen Belastung bei Herstellung, Transport, Montage und Verwendung der Membran.

Dieses Ausfüllen erfolgt vorzugsweise vor dem Einbringen der Solarzelle 3 in die Aussparung 10. Vorzugsweise erfolgt dieses Ausfüllen mit einem Kleb- oder Dichtstoff durch Siebdruckkleben, wobei unter Verwendung einer Siebdruckmaske die Zwischenräume zwischen den Solarzelleneinheiten mit einem Kleb- oder Dichtstoff ausgefüllt werden, welcher anschliessend durch UV-Strahlung ausgehärtet wird. Bei dem Kleb- oder Dichtstoff handelt es sich vorzugsweise um einen 1 komponentigen UV-härtbare Acrylat- oder Acrylathybrid Kleb/Dichtstoff.

Vorzugsweise wird nach dem Einbringen der Solarzelle 3 in die Aussparung 10 der Schottschicht 2 die Solarzelle formschlüssig mit der Schottschicht verbunden, insbesondere durch Erwärmen und/oder Umformen, insbesondere durch Walzen, der Schottschicht.

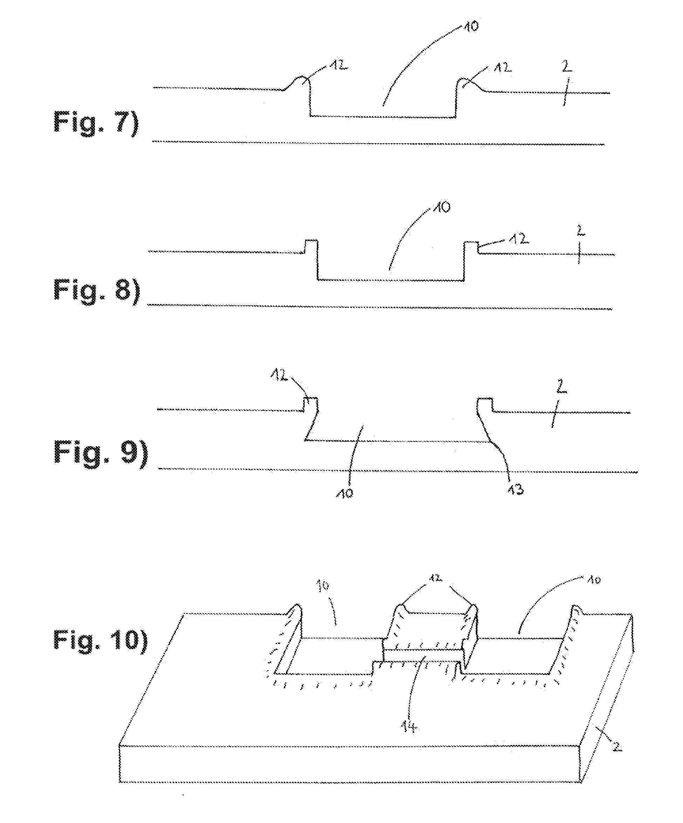

In den Figuren 7, 8 und 9 sind Querschnitte durch mögliche Schottschichten, welche eine Aussparung aufweisen, dargestellt. Vorzugsweise weisen diese Schottschichten an den Aussparungen 10 Überstände 12 aus dem Material der Schottschicht auf. Figur 7 zeigt eine mögliche Schottschicht hergestellt durch Walzprägung, wobei die Überstände 12 durch verdrängtes Material der Schottschicht während der Walzprägung resultieren. Die Figuren 8 und 9 zeigen mögliche Schottschichten hergestellt durch Extrusion, wobei die Überstände 12 aus der Form der Düse resultieren. Solche Überstände sind dahingehend von Vorteil, dass dadurch, nach dem Einsetzen einer Solarzelle 3 in die Aussparung 10, durch Erwärmen und/oder Umformen der Schottschicht insbesondere die Aussparung erwärmt und/oder umgeformt werden und dadurch eine gute Verkapselung und einen guten Kontakt der Solarzelle mit der Schottschicht gewährleisten, insbesondere wenn durch die Überstände nach dem Erwärmen und/oder Umformen Teile der Oberseite der Solarzelle von der Schottschicht umgeben sind. Die umgeformte Aussparung kann daher als Dichtkante und Zugsicherung wirken.

In Figur 9 ist weiter ersichtlich, dass, insbesondere im Extrusionsverfahren, die Aussparung 10 einen Hinterschnitt 13 aufweisen kann, welcher nach dem Einsetzen der Solarzelle als Zwischenraum wirken kann. Die Versiegelung der front- und rückseitigen Randabschlüsse der im Extrusionsverfahren hergestellten Schottschichten erfolgt vorzugsweise durch Verkleben, Verpressen oder Verschweissen mit einem Randstück von 5 - 15 cm Länge, welches die selbe Breite und Dicke und Geometrie und das selbe Material wie die Schottschicht aufweist.

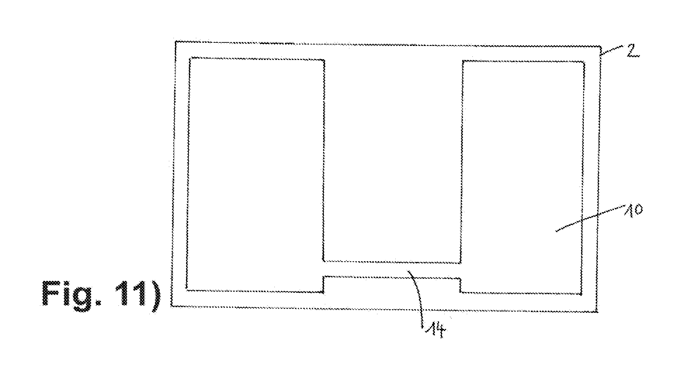

Figur 10 zeigt eine perspektivische Ansicht von einem Querschnitt einer Schottschicht, deren Aussparungen und der daraus resultierenden Überstände 12 im Walzprägverfahren hergestellt wurden. Ferner zeigt Figur 10 einen Verbindungskanal 14, welcher die beiden Aussparungen miteinander verbindet. In einem solchen Verbindungskanal können beispielsweise Mittel zur elektrischen Verbindung angeordnet werden, durch Umformen der Überstände, welche entlang dem Verbindungskanal angeordnet sind, können die Mittel zur elektrischen Verbindung, welche beispielsweise in den jeweiligen Aussparungen angeordnete Solarzellen miteinander verbinden, verkapselt werden. Figur 11 zeigt eine Aufsicht der Schottschicht aus Figur 10.

Falls die Membran weiter eine Deckschicht 8 aufweist, kann diese, nach dem Einbringen der Solarzelle 3 in die Aussparung 10 der Schottschicht aufgebracht werden. Das Aufbringen kann beispielsweise durch Kalandrieren, Kaschieren oder Vakuumlamination erfolgen.

Selbstverständlich ist die Erfindung nicht auf die gezeigten und beschriebenen Ausführungsbeispiele beschränkt.

### Bezugszeichenliste

- 1: Membran
- 2: Schottschicht
- 3: Solarzelle
- 4: Seitenfläche der Solarzelle
- 5: Unterseite der Solarzelle
- 6: Oberseite der Solarzelle
- 7: Zwischenraum
- 8: Deckschicht
- 9: Mittel zur elektrischen Verbindung
- 10: Aussparung
- 11: Klebschicht
- 12: Überstand
- 13: Hinterschnitt
- 14: Verbindungskanal

## Patentansprüche

1. Membran (1) umfassend:
eine Schottschicht (2) sowie mindestens eine Solarzelle (3), wobei die Seitenflächen (4) sowie die Unterseite (5) der mindestens einen Solarzelle (3) von der Schottschicht (2) umgeben sind.

2. Membran (1) gemäss Anspruch 1, **dadurch gekennzeichnet, dass** zusätzlich Teile der Oberseite (6) der Solarzelle (3) von der Schottschicht umgeben sind.

3. Membran (1) gemäss Anspruch 2, **dadurch gekennzeichnet, dass** 1 - 3 % der Oberseite (6) der Solarzelle (3) von der Schottschicht umgeben sind.

4. Membran (1) gemäss einem der Ansprüche 2 oder 3, **dadurch gekennzeichnet, dass** die Oberseite (6) der Solarzelle (3) derart von der Schottschicht umgeben ist, dass die Seitenflächen (4) und die Unterseite (5) der Solarzelle (3) vor Flüssigkeiten auf der Oberseite (6) der Solarzelle (3) geschützt sind.

5. Membran (1) gemäss einem der vorhergehenden Ansprüche, **dadurch gekennzeichnet, dass** zwischen mindestens einer der Seitenflächen (4) oder der Unterseite (5) der Solarzelle und der Schottschicht (2) ein Zwischenraum (7) ausgebildet ist.

6. Membran (1) gemäss Anspruch 5, **dadurch gekennzeichnet, dass** in dem Zwischenraum (7) Mittel zur elektrischen Verbindung (9) angeordnet sind.

7. Membran (1) gemäss einem der vorhergehenden Ansprüche, **dadurch gekennzeichnet, dass** die Dicke der Solarzelle (3) 30 - 50 % der Dicke der Schottschicht (2) beträgt.

8. Membran (1) gemäss einem der vorhergehenden Ansprüche, **dadurch gekennzeichnet, dass** auf der Oberseite (6) der Solarzelle (3) zusätzlich eine Deckschicht (8) aufgebracht ist.

9. Membran (1) gemäss Anspruch 8, **dadurch gekennzeichnet, dass** die Transmission des Materials der Deckschicht (8), gemessen bei einer Deckschichtdicke von 0.1 mm in einem Spektrum von 300-1300 nm, mehr als 85% beträgt.

10. Membran (1) gemäss einem der vorhergehenden Ansprüche, **dadurch gekennzeichnet, dass** die Schottschicht (2) eine Thermoplastschicht, vorzugsweise eine Schicht aus thermoplastischen Polyolefinen oder Polyvinylchlorid (PVC), insbesondere eine Schicht aus Polypropylen (PP) oder Polyethylen (PE), aufweist.

11. Membran (1) gemäss einem der vorhergehenden Ansprüche, **dadurch gekennzeichnet, dass** die Schottschicht (2) eine Dicke von 0.5 - 8 mm, bevorzugt 1.5 - 5 mm, insbesondere 1.2 - 2 mm aufweist.

12. Verfahren zur Herstellung einer wasserdichten Membran (1) gemäss einem der Ansprüche 1 - 11, **dadurch gekennzeichnet, dass** in eine Aussparung (10) in einer Schottschicht (2) eine Solarzelle (3) eingebracht wird.

13. Verfahren gemäss Anspruch 12, **dadurch gekennzeichnet, dass** die Schottschicht (2) aufweisend eine Aussparung (10) im Extrusionsverfahren und/oder im Walzenprägverfahren hergestellt wird.

14. Verfahren gemäss einem der Ansprüche 12 oder 13, **dadurch gekennzeichnet, dass** nach dem Einbringen der Solarzelle (3) in die Aussparung (10) der Schottschicht (2) die Solarzelle formschlüssig mit der Schottschicht verbunden wird, insbesondere durch Erwärmen und/oder Umformen der Schottschicht.
